# EUROPÄISCHE PATENTSCHRIFT

(11) **EP 3 552 962 B1**
(45) Veröffentlichungstag und Bekanntmachung des Hinweises auf die Patenterteilung: **31.08.2022**
(21) Anmeldenummer: 19166466.3
(22) Anmeldetag: 01.04.2019
(51) Int. Cl.: B64D 11/00, B64D 11/04, G06Q 10/08, G06Q 50/12

(54) **SYSTEM ZUR BESTANDSFÜHRUNG EINER BORDVERPFLEGUNG EINES FAHRZEUGS**
SYSTEM FOR INVENTORY MANAGEMENT OF ON-BOARD REFRESHMENTS FOR A VEHICLE
SYSTÈME DE MAINTENANCE DE FICHIER D'UNE RESTAURATION DE BORD D'UN VÉHICULE

(30) Priorität: 09.04.2018 DE 102018205289
(43) Veröffentlichungstag der Anmeldung: 16.10.2019
(60) Teilanmeldung: 22187185.8
(73) Patentinhaber: Airbus Operations GmbH, 21129 Hamburg (DE)
(72) Erfinder: REISS, Matthias, 21129 Hamburg (DE); BAUER, Michael, 21129 Hamburg (DE); KAUFELD, Norbert, 21129 Hamburg (DE); DAHMS, Tobias, 21129 Hamburg (DE); HOELSCHER, Heinrich, 21129 Hamburg (DE); MORTENSEN ERNITS, Rafael, 28209 Bremen (DE); FREITAG, Michael, 28719 Bremen (DE)
(74) Vertreter: Isarpatent

(56) Entgegenhaltungen:
- DE-A1-102007 007 717
- DE-A1-102010 027 709
- US-A1- 2009 112 377
- US-A1- 2011 238 742
- US-A1- 2015 057 796

## Beschreibung

Die vorliegende Erfindung betrifft ein System zur Bestandsführung einer Bordverpflegung eines Fahrzeugs.

Obwohl in vielfältigen Anwendungen einsetzbar, werden die vorliegende Erfindung sowie die ihr zugrunde liegende Problematik in Bezug auf Passagierflugzeuge näher erläutert. Die beschriebenen Verfahren und Vorrichtungen können jedoch ebenso in unterschiedlichen Fahrzeugen und in allen Bereichen der Transportindustrie, beispielsweise für Straßenfahrzeuge, für Schienenfahrzeuge, für Luftfahrzeuge oder für Wasserfahrzeuge eingesetzt werden.

Derzeit an Bord moderner Passagierflugzeuge vorgesehene Bordküchen umfassen üblicherweise Stellplätze bzw. Einschubfächer, in welche Container und/oder Rollcontainer (englisch: "trolley" oder "galley cart") eingeschoben werden können, die mit Versorgungsgütern bzw. Serviceprodukten wie z. B. Nahrungsmitteln und/oder Getränken zur Versorgung der Passagiere an Bord des Flugzeugs beladen sind. Zur Kenntlichmachung der Inhalte der Trolleys bzw. Container werden diese klassischerweise mit Aufklebern versehen, die das Catering-Unternehmen bei der Beladung aufbringt. Zusätzlich werden Listen erstellt, denen die Kabinencrew eine Aufstellung der verfügbaren Serviceprodukte sowie deren Lagerposition in der Flugzeugbordküche entnehmen kann. Da diese Listen der Kabinencrew lediglich den Ausgangsbeladungszustand der Flugzeugbordküche vermitteln, ist es für die Kabinencrew schwierig, während des Flugs die Übersicht über das Inventar der Bordküche behalten.

Die Druckschrift DE 10 2009 058 327 A1 offenbart ein System zur Lagerhaltung in einer Flugzeugbordküche, bei welchem Aufnahmeeinrichtungen wie Boxen, Einschübe oder Trolleys oder dergleichen mit Transpondern versehen sind, die für deren Inhalt charakteristische Identifikationssignale aussenden, welche wiederum von einer Sende-/Empfangseinheit der Bordküche eingelesen werden, um derart das Inventar der Bordküche zu bestimmen. Hierdurch soll die Übersicht über das Inventar der Bordküche verbessert werden.

Die Druckschrift US 2009/112377 A1 zeigt ein Bestandsführungssystem für Bordverpflegung welches kontinuierlich aktualisiert wird, beispielsweise durch Lesen eines RFID Tags. Weitere Bestandsführungssysteme sind aus den Druckschriften DE 2010 027709 A1, DE10 2007007717 A1 und US 2015/057796 A1 bekannt.

Vor diesem Hintergrund liegt der vorliegenden Erfindung die Aufgabe zugrunde, verbesserte Lösungen für die Bestandsführung einer Bordverpflegung zu finden, bei denen jederzeit auch während der Austeilung der Produkte die Übersicht über das Inventar erhalten bleibt.

Erfindungsgemäß wird diese Aufgabe gelöst durch ein System mit den Merkmalen des Patentanspruchs 1 und durch ein Luftfahrzeug mit den Merkmalen des Patentanspruchs 18.

Demgemäß ist ein System zur Bestandsführung einer Bordverpflegung eines Fahrzeugs vorgesehen. Das System umfasst eine Bordküche, welche mit einer Steuereinheit zur Steuerung der Bordküche versehen ist, wobei die Steuereinheit dazu ausgebildet ist, Bestandsführungsdaten der Bordküche bereitzustellen; eine Serviceeinheit zum Transport von Versorgungsgütern innerhalb des Fahrzeugs, wobei die Bestandsführungsdaten ein Bestandsverzeichnis der mit der Serviceeinheit transportierten Versorgungsgüter umfassen; und zumindest ein Bedienelement, welches über eine drahtlose Datenverbindung mit der Steuereinheit der Bordküche kommunikativ verbunden und dazu ausgebildet ist, eine Entnahme eines Versorgungsguts von der Serviceeinheit und/oder eine Aufnahme eines Versorgungsguts von der Serviceeinheit zu erfassen und darauf aufbauend eine Aktualisierung des Bestandsverzeichnisses der transportierten Versorgungsgüter zu veranlassen.

Weiterhin ist ein Luftfahrzeug mit dem erfindungsgemäßen System vorgesehen.

Eine der vorliegenden Erfindung zugrunde liegende Idee besteht darin, ein Bestandsverzeichnis der vorhandenen Versorgungsgüter bzw. Serviceprodukte zentral in der Bordküche zu verwalten und jederzeit auf dem aktuellen Stand zu halten, auch wenn zwischenzeitlich einzelne Versorgungsgüter an die Passagiere bzw. das Personal ausgeteilt bzw. anderweitig ausgegeben werden. Zu diesem Zweck stellt die vorliegende Erfindung eine drahtlose Datenverbindung bereit, welche die Bordküche mit zumindest einem Bedienelement verbindet. Das oder die Bedienelemente dienen hierbei dazu, die Ausgabe eines Versorgungsguts aus bzw. von der Serviceeinheit festzustellen und diese Information an die Bordküche über die drahtlose Verbindung weiterzuleiten. Darauf aufbauend wird das Bestandsverzeichnis anschließend entsprechend aktualisiert. Entsprechend kann ebenso die Aufnahme eines Versorgungsguts in die, auf die bzw. von der Serviceeinheit erfasst werden und das Bestandsverzeichnis entsprechend aktualisiert werden. In der Bordküche ist somit jederzeit der aktuell vorhandene Bestand an Versorgungsgütern abrufbar. Letztendlich eröffnet die Erfindung die Möglichkeit, vorhandene Serviceprodukte in automatisierter Weise, insbesondere in Echtzeit, in einer Kabine eines Fahrzeugs zu verfolgen bzw. deren Verfügbarkeit zu überwachen. Beispielsweise kann das zumindest eine Bedienelement eine aktuelle Position übermitteln, d.h. beispielsweise in welcher Passagierreihe und/oder in welchem Kabinenabschnitt sich die bedienende Person, d.h. das Bedienelement, und/oder sich die Serviceeinheit befinden. Die Erfindung stellt somit ein automatisiertes Warenwirtschaftssystem für Catering-Waren für ein Fahrzeug, insbesondere für eine Fahrzeugkabine, bereit, welches eine Kabinencrew jederzeit in dynamischer Weise über den aktuellen Bestand der Waren sowie deren Bestellsituation informiert.

Erfindungsgemäß umfasst das Bedienelement ein erstes Bedienelement, welches als tragbarer Computer ausgebildet ist. Beispielsweise kann das Personal einer Fahrzeugkabine ein derartiges Bedienelement mit sich führen, z.B. in Form eines mobilen Endgeräts oder allgemein eines "intelligenten Mobilgeräts" (englisch: "smart mobile device"). In einem anderen Beispiel kann ein weiteres Bedienelement an einem als Serviceeinheit dienenden Rollcontainer angeordnet, angebracht und/oder in diesen anderweitig integriert sein kann. Sobald die Kabinenbesatzung, z.B. Flugbegleiter, ein Produkt aus dem Rollcontainer oder einer anderen Serviceeinheit entnehmen und an einen Passagier ausgeben, kann die Entnahme des Produkts mit Hilfe des Bedienelements festgestellt und das Produkt gegebenenfalls automatisch identifiziert werden, z.B. mit Hilfe eines Barcodescanners oder dergleichen. Über das Bedienelement wird im Anschluss eine Aktualisierung der Bestandsliste bzw. des Bestandsverzeichnisses veranlasst, welche diesem Rollcontainer bzw. dieser Serviceeinheit zugeordnet ist und eine Auflistung der in diesem enthaltenen bzw. transportierten Produkte umfasst.

Eine Serviceeinheit im Sinne der Erfindung bezeichnet einerseits Servicewagen wie Rollcontainer, d.h. Trolleys, Speisewagen oder dergleichen. Darüber hinaus umfassen Serviceeinheiten im Sinne der Erfindung jedoch ebenso allgemeine Aufnahmeeinrichtungen bzw. Transportvorrichtungen für Versorgungsgüter und/oder Serviceprodukte wie beispielsweise Container, Boxen (englisch: "standard units") oder dergleichen. Weiterhin kann auch ein Tablett oder eine entsprechende Transportvorrichtung eine Serviceeinheit im Sinne der Erfindung darstellen. In diesem Fall wird erfasst, ob ein Versorgungsgut von dem Tablett entnommen bzw. auf dieses gestellt wird. Anschließend wird das Bestandsverzeichnis des Tabletts entsprechend aktualisiert. Dem Fachmann wird sich hierbei erschließen, dass die vorliegende Erfindung grundsätzlich die drahtlose Verbindung der Bordküche mit einer Vielzahl von derartigen Serviceeinheiten ermöglicht. Ebenso kann eine Vielzahl von Bedienelementen vorgesehen sein.

Die drahtlose Verbindung im Sinne der Erfindung kann beispielsweise über ein drahtloses lokales Netzwerk realisiert werden, z.B. ein WLAN oder ähnlich. Hierzu sind unterschiedliche Ausführungen denkbar. Beispielsweise kann ein ohnehin schon für andere Zwecke in einer Passagierkabine vorhandenes drahtloses Netzwerk genutzt werden. Andererseits ist die Bereitstellung eines separaten drahtlosen Netzwerks speziell zu diesem Zweck denkbar. Hierbei kann es sich insbesondere um ein gesichertes Netzwerk handeln, zu dem lediglich Personen bzw. Geräte mit entsprechender Sicherheitsauthentifizierung Zugang erhalten, z.B. das Bordpersonal des Fahrzeugs und/oder entsprechende elektronische Vorrichtungen, die lediglich von dem Bordpersonal bedient werden sollen/können.

Vorteilhafte Ausgestaltungen und Weiterbildungen ergeben sich aus den weiteren Unteransprüchen sowie aus der Beschreibung unter Bezugnahme auf die Figuren.

Gemäß einer Weiterbildung kann das zumindest eine Bedienelement eine Identifizierungseinheit aufweisen. Die Identifizierungseinheit kann dazu ausgebildet sein, ein Versorgungsgut anhand eines darauf angebrachten Kennzeichens zu identifizieren. Beispielsweise können optoelektronisch lesbare Schriften wie Strichcodes, Balkencodes, Streifencodes oder Barcodes oder dergleichen außen an den Versorgungsgütern angebracht sein, welche von der Identifizierungseinheit erkannt werden können. Entsprechend kann die Identifizierungseinheit beispielsweise als Barcodescanner oder dergleichen ausgebildet sein. Barcodes im Sinne der Erfindung umfassen hierbei sowohl eindimensionale bzw. lineare Barcodes, d.h. insbesondere Strichcodes, als auch zweidimensionale Ausführungen bzw. Matrixcodes, z.B. QR-Codes usw. Alternativ oder zusätzlich kann die Identifizierungseinheit zur allgemeinen Objekterkennung ausgebildet sein. Beispielsweise kann die Identifizierungseinheit eine Kamera aufweisen, mit Hilfe derer Formen, Farben usw. von Objekten und/oder Oberflächen erfasst werden und darauf aufbauend ein Versorgungsgut identifiziert wird.

Gemäß einer Weiterbildung kann die Identifizierungseinheit als Barcodelesegerät ausgebildet sein. Die Identifizierungseinheit kann somit als Datenerfassungsgerät ausgebildet sein, welches verschiedene Barcodes oder dergleichen lesen und weitergeben kann. Das Barcodelesegerät kann beispielsweise als CCD-Scanner, Laserscanner oder dergleichen eingerichtet sein. Darüber hinaus umfassen Barcodelesegeräte im Sinne der Erfindung jedoch ebenso Kamera-Scanner bzw. Imager, d.h. Geräte, welche einen Barcode mit Hilfe einer, insbesondere optischen, Kamera erfassen und das aufgenommene Bild anschließend mittels digitaler Bildverarbeitung aufbereiten, um den Barcode digital zu erfassen.

Gemäß einer Weiterbildung kann das zumindest eine Bedienelement zur Anzeige der Bestandsführungsdaten ausgebildet sein. Beispielsweise kann das Bedienelement ein Display wie einen Bildschirm oder eine andere elektronische optische Anzeige aufweisen, auf der die Bestandsführungsdaten dargestellt werden können. In einem konkreten Beispiel kann das Bedienelement ein intelligentes Mobilgerät sein, z.B. eine Datenbrille (Smartglasses), welche auf einem oder beiden Brillengläsern Informationen projizieren kann. Die Datenbrille kann ferner mit einem Kamera-Scanner ausgestattet sein, welcher zur Erfassung von Barcodes ausgebildet ist. Darüber hinaus kann die Datenbrille an ein (sicheres) drahtloses Netzwerk angebunden sein. Das Flugpersonal kann eine derartige Datenbrille beispielsweise während der Essens- und/oder Getränkeausgabe tragen. Die Datenbrille kann jedes ausgegebene Serviceprodukt erfassen und identifizieren, sodass das Bestandsverzeichnis der Serviceprodukte mittels Datenübertragung über das drahtlose Netzwerk jederzeit auf dem aktuellen Stand gehalten werden kann, ohne dass der gewöhnliche Catering-Betrieb in irgendeiner Weise behindert bzw. beeinträchtigt wird.

Gemäß einer Weiterbildung können die Bestandsführungsdaten Cateringdaten, Passagierdaten und/oder Kabinendaten oder dergleichen umfassen. Die Bestandsführungsdaten umfassen in dieser Weiterbildung somit nicht nur ein Bestandsverzeichnis bzw. eine Bestandsliste einer oder mehrerer Serviceeinheiten bzw. der Bordküche. Darüber hinaus können verschiedene zusätzliche Informationen bzw. Daten enthalten sein. Beispielsweise können die Bestandsführungsdaten Cateringdaten beinhalten, welche von einem Catering-Dienstleister bereitgestellt werden und unter anderem Informationen über die gelieferte Bordverpflegung enthalten, d.h. welche Produkte in welchem Umfang und in welcher Form bereitgestellt werden. Weiterhin können die Bestandsführungsdaten Passagierdaten beinhalten, die z.B. Daten darüber enthalten, welche Passagiere bestimmte Catering-Wünsche bzw. Optionen gebucht haben. Weiterhin können die Bestandsführungsdaten Kabinendaten beinhalten. Kabinendaten können beispielsweise einen Sitzplan der Passagiere umfassen.

Gemäß einer Weiterbildung kann das erste Bedienelement ein Tablet-Computer, ein Smartphone, eine Smartwatch oder eine Datenbrille (Smartglasses) sein.

Gemäß einer Weiterbildung kann das zumindest eine Bedienelement ein zweites Bedienelement umfassen. Das zweite Bedienelement kann in die Serviceeinheit integriert sein. Beispielsweise kann das zweite Bedienelement außen an der Serviceeinheit befestigt bzw. (lösbar oder nicht lösbar) angebracht sein, z.B. in Form eines Touchpads oder eines Tablet-Computers. In einem anderen Beispiel kann das zweite Bedienelement ein Touchscreen oder elektronisches Bedienfeld sein, welches fest in ein Gehäuse der Serviceeinheit eingelassen ist. Das zweite Bedienelement kann weiterhin eine Identifizierungseinheit, z.B. ein Barcodelesegerät, aufweisen, über welches Versorgungsprodukte erfasst werden können. Beispielsweise kann das Bedienelement in einen Servicewagen oder Rollcontainer integriert sein. Alternativ oder zusätzlich kann das Bedienelement beispielsweise auch in ein Tablett integriert sein, welches somit als "Smart Tablet" die Auflage oder Entnahme von Versorgungsgütern nachvollziehen kann.

Gemäß einer Weiterbildung kann das zweite Bedienelement ein Touchscreen und/oder ein elektronisches Bedienfeld sein.

Gemäß einer Weiterbildung kann das zumindest eine Bedienelement dazu ausgebildet sein, die Serviceeinheit zu identifizieren und darauf aufbauend der Serviceeinheit das Bestandsverzeichnis zuzuordnen. In einer Ausführung können beispielsweise gewöhnliche Rollcontainer ohne elektronische Anbindung an das drahtlose Netzwerk verwendet werden. Die Rollcontainer können beispielsweise mit einem Barcode oder einem anderen Kennzeichnen gekennzeichnet sein. Über das Kennzeichen kann dem Rollcontainer wiederum in den vorhandenen Bestandsführungsdaten eindeutig ein Bestandsverzeichnis zugeordnet sein, wobei die Informationen beispielsweise als Cateringdaten von einem Catering-Dienstleister bereitgestellt worden sein können. Das Bedienelement kann beispielsweise eine Identifizierungseinheit, z.B. ein Barcodelesegerät, aufweisen, mit Hilfe derer der Rollcontainer identifiziert wird. Darauf aufbauend kann das zugeordnete Bestandsverzeichnis während einer anschließenden Essens- und/oder Getränkeausgabe zentral über das Bedienelement aktualisiert werden, ohne dass der Rollcontainer selber an das drahtlose Netzwerk in irgendeiner Form angebunden sein muss. Alternativ oder zusätzlich können neben Barcodes andere Identifikationsmittel genutzt werden. Beispielsweise kann die Serviceeinheit einen RFID-Tag oder dergleichen aufweisen, welcher von einem in dem Bedienelement vorgesehenen Lesegerät bzw. Identifikationsvorrichtung ausgelesen werden kann.

Gemäß einer Weiterbildung kann das zumindest eine Bedienelement dazu ausgebildet ist, sich gegenüber der Serviceeinheit zu authentifizieren, wobei ein Zugriff auf das Bestandsverzeichnis der Serviceeinheit und/oder die Versorgungsgüter der Serviceeinheit nach erfolgreicher Authentifizierung freigegeben wird. Insbesondere kann das Bedienelement dazu ausgebildet sein, den Zugriff auf die Versorgungsgüter und/oder das Bestandsverzeichnis der Serviceeinheit zu verwalten, d.h. diesen beispielsweise freizugeben oder zu sperren. In dieser Weiterbildung kann unter anderem ein digitales Verschlusssystem umgesetzt werden, in welchem sich das Bordpersonal zunächst mit Hilfe des Bedienelements authentifizieren muss, bevor es Zugriff auf den Inhalt und/oder die Daten der Serviceeinheit erhält. Das Bedienelement, z.B. ein Smartphone oder ein Tablet-Computer, kann eine Software Anwendung umfassen, mit Hilfe derer die Serviceeinheit verriegelt und entriegelt werden kann, um den Zugriff auf die Transportgüter und/oder die Daten der Serviceeinheit zu sperren oder freizugeben. Bei der Verriegelung kann es sich beispielsweise um eine elektronische Verriegelung handeln, die über eine drahtlose Datenverbindung betätigt werden kann. Beispielsweise kann die Serviceeinheit über einen daran angebrachten RFID-Tag identifiziert werden. Zertifizierte Bedienelemente können sich nun mittels entsprechender Software-Anwendungen authentifizieren und nach erfolgreicher Authentifizierung auf die Daten und/oder die Versorgungsgüter der Serviceeinheit zugreifen. Dem Fachmann wird hierbei klar sein, dass ein Verschlusssystem auch rein auf Softwareebene umgesetzt werden kann, d.h. hiermit mithin somit lediglich der Zugriff auf die Daten der Serviceeinheit verwaltet werden kann. Ebenso sind Kombinationen aus Hardware- und Softwarelösungen möglich.

Gemäß einer Weiterbildung kann die Serviceeinheit einen Datenspeicher umfassen. Der Datenspeicher kann zur Speicherung des Bestandsverzeichnisses ausgebildet sein. Prinzipiell sind hierbei unterschiedliche Ausführungen denkbar. Beispielsweise kann die Serviceeinheit einen einmalig beschreibbaren oder wiederbeschreibbaren Datenspeicher enthalten, der ausschließlich von einem Catering-Dienstleister beschrieben und von dem Flugpersonal lediglich ausgelesen werden kann, z.B. mittels des zumindest einen Bedienelements. Eine Aktualisierung des Bestandsverzeichnisses kann in diesem Fall zentral über die Steuereinheit der Bordküche für jede Serviceeinheit erfolgen. Alternativ oder zusätzlich kann es jedoch vorgesehen sein, dass ein aktiver Zugriff auf den Datenspeicher für das Flugpersonal freigeschaltet ist, sodass eine aktualisierte Version des Bestandsverzeichnis direkt auf dem Datenspeicher der Serviceeinheit erstellt werden kann.

Gemäß einer Weiterbildung kann das zumindest eine Bedienelement kommunikativ mit dem Datenspeicher der Serviceeinheit verbunden und dazu ausgebildet sein, das Bestandsverzeichnis aus dem Datenspeicher auszulesen. Beispielsweise kann die Serviceeinheit mit einem aktiven oder passiven RFID-Tag ausgestattet sein, welcher einen entsprechenden Transponder und einen elektronischen Datenspeicher umfasst, der wiederum von einem geeigneten Lesegerät auslesbar ist, welches in das zumindest eine Bedienelement integriert sein kann. Beispielsweise kann das Bestandsverzeichnis von einem Catering-Dienstleister bereits vor der Verladung auf das Fahrzeug auf dem Datenspeicher entsprechend der gelieferten Ausstattung der Serviceeinheit angelegt worden sein. Das Flugpersonal kann nun die Serviceeinheit vor der Benutzung mit Hilfe des Bedienelements identifizieren bzw. deren Inhalt feststellen. Das entsprechende Bestandsverzeichnis wird während der Benutzung in der üblichen Weise kontinuierlich aktualisiert, indem jedes ausgegebene Produkt mit dem Bedienelement erfasst wird.

Gemäß einer Weiterbildung kann das zumindest eine Bedienelement kommunikativ mit dem Datenspeicher der Serviceeinheit verbunden und dazu ausgebildet sein, bei Entnahme eines Versorgungsguts von der Serviceeinheit und/oder Aufnahme eines Versorgungsguts von der Serviceeinheit eine Aktualisierung des Bestandsverzeichnisses auf dem Datenspeicher zu veranlassen. In dieser Weiterbildung trägt somit die Serviceeinheit (oder allgemein jede Serviceeinheit einer Vielzahl von Serviceeinheiten) eine aktuelle Version ihres Bestandsverzeichnisses. Dieses kann jederzeit von dem Flugpersonal mittels eines Bedienelements ausgelesen und aktualisiert werden. Nebenher kann ebenfalls eine zentrale Version des Bestandsverzeichnisses dieser Serviceeinheit fortlaufend aktualisiert werden.

Gemäß einer Weiterbildung kann die Serviceeinheit eine Serviceeinheit-Anzeige umfassen. Die Serviceeinheit-Anzeige kann zur Anzeige des Bestandsverzeichnisses ausgebildet sein. In einem Beispiel kann die Serviceeinheit-Anzeige in Form einer elektronischen optischen Anzeige mit Bedienfunktion, z.B. als ein Touchscreen, bereitgestellt sein, über welche zusätzlich Eingaben gemacht werden können und welche gleichzeitig als Bedienelement des Systems dient. In einem anderen Beispiel kann die Serviceeinheit lediglich eine Serviceeinheit-Anzeige ohne weitere Bedienfunktionen aufweisen, welche ausschließlich zur Ausgabe des Bestandsverzeichnisses oder anderer Bestandsführungsdaten ausgebildet ist. In einem weiteren Beispiel kann die Serviceeinheit eine Serviceeinheit-Anzeige zur Anzeige des Bestandsverzeichnisses und zusätzlich ein separates Bedienelement aufweisen, welches über die drahtlose Verbindung mit der Bordküche gekoppelt ist.

Gemäß einer Weiterbildung kann die Bordküche eine Bordküchen-Anzeige aufweisen. Die Bordküchen-Anzeige kann zur Anzeige der Bestandsführungsdaten ausgebildet sein. Die Bordküchen-Anzeige kann in konkreten Beispielen als elektronische optische Anzeige bzw. Display mit oder ohne Bedienfunktionen ausgebildet sein, z.B. als ein LED-, OLED-, TFT- oder LCD-Bildschirm oder dergleichen mit oder ohne Hintergrundbeleuchtung und/oder als ein Touchscreen usw., welcher neben einer Informationsausgabe auch eine Eingabe über einen als Tastfeld dienenden Bildschirm ermöglicht. Die Bordküchen-Anzeige kann zur Überwachung und/oder Steuerung der Bordküche dienen. Hierzu kann die Bordküchen-Anzeige mit der Steuereinheit gekoppelt sein.

Gemäß einer Weiterbildung kann die Steuervorrichtung der Bordküche kommunikativ mit einem Kabinenmanagementsystem des Fahrzeugs verbunden sein. Beispielsweise kann die Steuereinheit mit einem Controller Area Network (CAN) eines Kabinenmanagementsystems oder dergleichen verbunden sein, worüber ebenfalls eine Verbindung zu externen Catering-Dienstleistern, Airlines usw. möglich sein kann.

Die obigen Ausgestaltungen und Weiterbildungen lassen sich, sofern sinnvoll, beliebig miteinander kombinieren. Weitere mögliche Ausgestaltungen, Weiterbildungen und Implementierungen der Erfindung umfassen auch nicht explizit genannte Kombinationen von zuvor oder im Folgenden bezüglich der Ausführungsbeispiele beschriebenen Merkmale der Erfindung. Insbesondere wird dabei der Fachmann auch Einzelaspekte als Verbesserungen oder Ergänzungen zu der jeweiligen Grundform der vorliegenden Erfindung hinzufügen.

Die vorliegende Erfindung wird nachfolgend anhand der in den schematischen Figuren angegebenen Ausführungsbeispiele näher erläutert. Es zeigen dabei:
- Fig. 1: schematische Ansicht eines Systems zur Bestandsführung einer Bordverpflegung eines Fahrzeugs gemäß einer Ausführungsform der Erfindung;
- Fig. 2: schematische Seitenansicht eines Luftfahrzeugs mit dem System aus Fig. 1;
- Fig. 3: schematische Ansicht eines Systems zur Bestandsführung einer Bordverpflegung eines Fahrzeugs gemäß einer weiteren Ausführungsform der Erfindung; und
- Fig. 4: schematische Ansicht einer Serviceeinheit für ein System zur Bestandsführung einer Bordverpflegung eines Fahrzeugs gemäß einer weiteren Ausführungsform der Erfindung.

Die beiliegenden Figuren sollen ein weiteres Verständnis der Ausführungsformen der Erfindung vermitteln. Sie veranschaulichen Ausführungsformen und dienen im Zusammenhang mit der Beschreibung der Erklärung von Prinzipien und Konzepten der Erfindung. Andere Ausführungsformen und viele der genannten Vorteile ergeben sich im Hinblick auf die Zeichnungen. Die Elemente der Zeichnungen sind nicht notwendigerweise maßstabsgetreu zueinander gezeigt.

In den Figuren der Zeichnung sind gleiche, funktionsgleiche und gleich wirkende Elemente, Merkmale und Komponenten - sofern nichts anderes ausgeführt ist - jeweils mit denselben Bezugszeichen versehen.

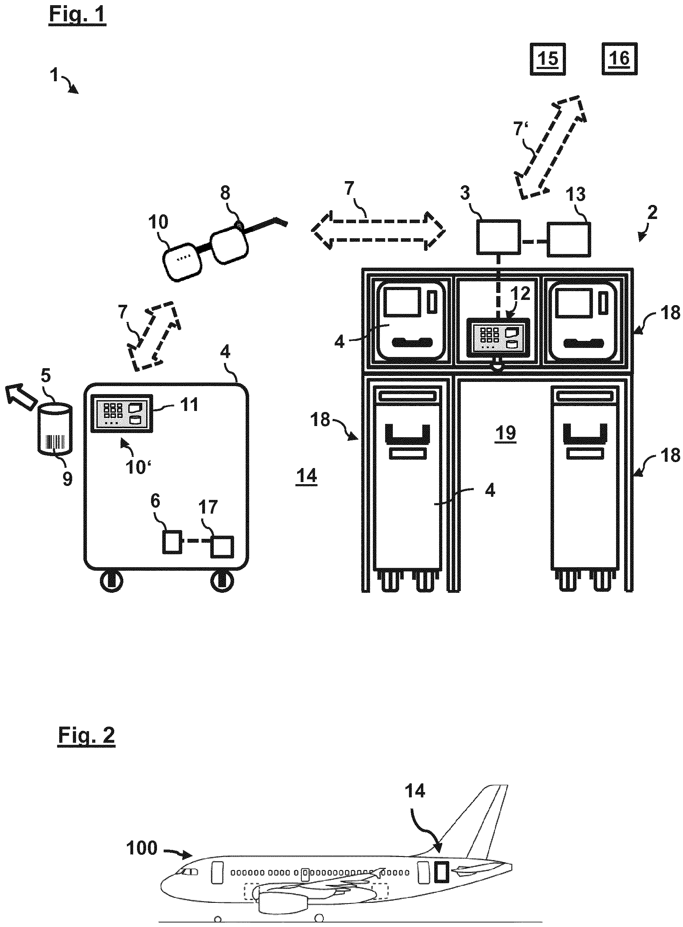

Figur 1 zeigt eine schematische Ansicht eines Systems 1 zur Bestandsführung einer Bordverpflegung eines Fahrzeugs gemäß einer Ausführungsform der Erfindung.

Das System 1 ist in einer Fahrzeugkabine 14 eines Luftfahrzeugs 100 vorgesehen, insbesondere eines Passagierflugzeugs, wie es beispielhaft in Fig. 2 dargestellt ist. Das System 1 umfasst eine Bordküche 10, die in Fig. 1 rein beispielhaft in mehrere Bordküchenmonumente 18 unterteilt ist. Jedes dieser Bordküchenmonumente 18 weist ein oder mehrere Einschubfächer 19 auf, die zur Aufnahme von einer oder mehreren Serviceeinheiten 4 ausgebildet sind. So weist eines der Bordküchenmonumente 18 (links unten in der Bordküche in Fig. 1) ein Einschubfach 19 zur Aufnahme einer Serviceeinheit 4 auf, in diesem Fall ein Rollcontainer. In dem Bordküchenmonument 18 rechts daneben (rechts unten in der Bordküche in Fig. 1) ist ein Einschubfach 19 für zwei Rollcontainer ausgebildet, wobei sich einer dieser beiden Rollcontainer gerade im Einsatz befindet (siehe die Serviceeinheit 4 links in Fig. 1). Über diesen beiden Bordküchenmonumenten 18 ist ein drittes Bordküchenmonument 18 angeordnet, welches Standard-Units als Serviceeinheiten 4 in einzelnen Einschubfächern 19 aufnehmen kann, z.B. Essensbehälter. Die Einschubfächer 19 können beispielsweise genormte Dimensionen zur Aufnahme von standardisierten Containern, Trolleys oder dergleichen aufweisen.

Das obere Bordküchenmonument 18 umfasst eine integrierte Bordküchen-Anzeige 12. Die Bordküchen-Anzeige 12 kann beispielsweise ein Bildschirm mit OLED- oder LCD-Technologie oder dergleichen sein, wobei die Bordküchen-Anzeige 12 berührungsempfindlich als Touchscreen bzw. Touchdisplay ausgebildet sein kann. Ferner kann die Bordküchen-Anzeige 12 an dem Bordküchenmonument 18 beweglich angelenkt sein. Die Bordküchen-Anzeige 12 dient in diesem Ausführungsbeispiel als Überwachungs- und/oder Bedienvorrichtung für die Bordküche 2. Hierzu ist die Bordküchen-Anzeige 12 mit einer Steuereinheit 3 verbunden, welche zur Steuerung der Bordküche 2 ausgebildet ist. Die Steuereinheit 3 ist wiederum mit einem Kabinenmanagementsystem 13 verbunden, z.B. mit einem Controller Area Network (CAN) oder dergleichen. Die Steuereinheit 3 kann hierbei weitere nicht abgebildete Komponenten enthalten, wie beispielsweise eine Mikroprozessor, einen Datenspeicher, Datenbanken usw.

Die Steuereinheit 3 ist ferner dazu ausgebildet, Bestandsführungsdaten der Bordküche 2 bereitzustellen, welche über die Bordküchen-Anzeige 12 angezeigt werden können. Die Bestandsführungsdaten umfassen einerseits ein Bestandsverzeichnis für jede der Serviceeinheiten 4, d.h. beispielsweise für den sich im Einsatz befindlichen Rollcontainer links in Fig. 1. Das Bestandsverzeichnis umfasst eine Auflistung alle in der jeweiligen Serviceeinheit 4 befindlichen Versorgungsgüter 5 bzw. Serviceprodukte, z.B. Speisen, Getränke usw. Andererseits umfassen die Bestandsführungsdaten weitere Daten, wie beispielsweise Cateringdaten, Passagierdaten und/oder Kabinendaten oder dergleichen. Cateringdaten können beispielsweise von einem Caterer 16 wie einem Catering-Dienstleister bereitgestellt werden und unter anderem Informationen über die gelieferte Bordverpflegung enthalten, d.h. welche Produkte in welchem Umfang und in welcher Form bereitgestellt werden. Passagierdaten können beispielsweise von einer Airline 15 bereitgestellt werden und unter anderem Informationen über die Passagiere enthalten, welche Passagiere bestimmte Catering-Wünsche bzw. Optionen gebucht haben. Die Kabinendaten können beispielsweise von dem Kabinenmanagementsystem 13 bereitgestellt werden und unter anderem Informationen hinsichtlich der Kabinenkonfiguration enthalten, z.B. einen Sitzplan der Passagiere etc. Die Steuereinheit 3 kann zwecks Beschaffung dieser Daten mit den einzelnen Anbietern bzw. Datenquellen direkt oder indirekt per Datenleitung oder drahtloser Verbindung 7' kommunikativ verbunden sein. In der beispielhaften Konfiguration von Fig. 1 ist die Steuereinheit 3 über eine Datenleitung mit dem Kabinenmanagementsystem 13 verbunden und kann darüber hinaus über ein dafür vorgesehenes drahtloses Netzwerk 7' mit der Airline 15 und dem Caterer 16 in Kontakt treten, z.B. Daten von Datenbanken abrufen bzw. anfordern.

Das System 1 umfasst ferner ein erstes Bedienelement 10, welches über eine drahtlose Datenverbindung 7, z.B. ein gesichertes WLAN-Netzwerk, mit der Steuereinheit 3 der Bordküche 2 kommunikativ verbunden ist. In der beispielhaften Ausführung von Fig. 1 handelt es sich bei dem ersten Bedienelement 10 um Smartglasses, d.h. um eine Datenbrille, welche dazu ausgebildet sind, eine Entnahme eines Versorgungsguts 5 aus den Serviceeinheiten 4 zu erfassen und darauf aufbauend eine Aktualisierung des Bestandsverzeichnisses der transportierten Versorgungsgüter 5 zu veranlassen. Ebenso kann das erste Bedienelement 10 eine Aufnahme eines Versorgungsguts 5 in die Serviceeinheit 4 erfassen. Hierzu umfasst das erste Bedienelement 10 eine Identifizierungseinheit 8 in Form eines Kamera-Scanners bzw. Imagers. Die Identifizierungseinheit 8 ist als Barcodelesegerät ausgebildet, um ein Versorgungsgut 5 anhand eines darauf angebrachten Kennzeichens 9 zu erfassen und zu identifizieren. Beispielsweise kann es sich bei dem links in Fig. 1 dargestellten Versorgungsgut 5 um eine Getränkedose handeln, auf der ein Strichcode als Kennzeichen 9 aufgedruckt ist. Das erste Bedienelement 10 wird beispielweise von einem Flugbegleiter (nicht dargestellt) während der Essens- und/oder Getränkeausgabe am Körper getragen. Während der Flugbegleiter das Versorgungsgut 5 ausgibt, wird das Kennzeichen 9 von dem ersten Bedienelement 10 erfasst und identifiziert. Anschließend wird über die drahtlose Verbindung 7 eine Aktualisierung des zugehörigen Bestandsverzeichnisses veranlasst. Die Bordküche 2 ist somit jederzeit über den aktuellen Bestand der Versorgungsprodukte informiert.

Das erste Bedienelement 10 ist als Datenbrille ferner dazu ausgebildet, die Bestandsführungsdaten anzuzeigen, z.B. auf und/oder an einem der Brillengläser (angedeutet durch eine gestrichelte Linie auf dem ersten Bedienelement 10 in Fig. 1). Derart kann das Flugpersonal jederzeit und automatisch Passagier-, Kabinen- und/oder Cateringdaten angezeigt bekommen, z.B. um ein gebuchtes Produkt für einen konkreten Passagier an einem bestimmten Sitzplatz auszuwählen. Gleichzeitig kann das erste Bedienelement 10 ebenfalls Informationen über das Bestandsverzeichnis ausgeben, sodass beispielsweise auf Basis eines Passagierwunsches überprüft werden kann, ob das gewünschte Produkt in der von dem Flugbegleiter mitgeführten oder ggf. einer der weiteren Serviceeinheiten 4 vorrätig ist. Es ist somit jederzeit möglich, Passagierinformationen bzw. -wünsche mit Catering-Vorgaben und der Konfiguration des Luftfahrzeugs abzustimmen. Darüber hinaus können die Versorgungsgüter 5 in automatisierter Weise, insbesondere in Echtzeit, in der Fahrzeugkabine 14 verfolgt werden bzw. deren Verfügbarkeit überwacht werden. Beispielsweise kann erste Bedienelement 10 eine aktuelle Position übermitteln, d.h. beispielsweise in welcher Passagierreihe und/oder in welchem Kabinenabschnitt sich die Crew und/oder die Serviceeinheit 4 gerade befinden. Beispielsweise kann an dem Bedienelement 10 und/oder der Serviceeinheit 4 dynamisch angezeigt werden, welche Bestellung an dem jeweiligen Sitzplatz bzw. der Sitzreihe vorliegt. Im Ergebnis wird ein automatisches, dynamisches Warenwirtschafts- und Warentrackingsystem für die Bordverpflegung des Luftfahrzeugs 100 geschaffen, welches jederzeit einen Ist-Zustand des Catering-Bestandes überwacht, ohne dass die Warenausgabe in irgendeiner Weise beeinträchtigt wird. Dem Fachmann wird sich unmittelbar erschließen, dass weitere Funktionalitäten ohne weiteres ergänzt werden können. Beispielsweise kann über das dargestellte System 1 ein Bezahlsystem für die Warenausgabe umgesetzt werden, wobei entsprechende Bezahlaktionen automatisch über das erste Bedienelement 10 (oder ein anderes Bedienelement) ausgeführt werden können.

In der dargestellten Ausführung des Systems 1 gibt es mehrere Möglichkeiten auch die Serviceeinheiten 4 in das System einzubinden. In einer einfachen Ausführung können die Serviceeinheiten 4 lediglich passiv in das System 1 eingebunden sein, ohne aktiv über das drahtlose Netzwerk 7 kommunizieren zu können. Vielmehr können die Serviceeinheiten 4 lediglich Identifikationskennzeichen aufweisen, z.B. einen Barcode. In der beispielhaften Ausführung von Fig. 1 weist die Serviceeinheit 4 links in der Figur beispielhaft einen aktiv oder passiv auslesbaren RFID-Tag 17 auf, über welchen die Serviceeinheit 4 von dem ersten Bedienelement 10 identifiziert werden kann. Hierzu kann der RFID-Tag 17 einen üblichen Transponder (nicht abgebildet) und das erste Bedienelement eine entsprechende Sende-/Empfangseinheit (ebenfalls nicht abgebildet) umfassen. Ein Flugbegleiter kann nun zu Beginn der Warenausgabe zunächst die Serviceeinheit 4 identifizieren und darauf aufbauend der Serviceeinheit 4 eindeutig ein Bestandsverzeichnis zuzuordnen, welches beispielsweise bereits zentral in der Steuereinheit 3 bereitgestellt wurde und dort zuvor beispielsweise von dem Caterer 16 übersendet wurde (z.B. durch Download oder einer anderen Form der Datenübertragung). Während der anschließenden Warenausgabe kann nun das Bestandsverzeichnis in der oben geschilderten Weise zentral aktualisiert werden.

Das erste Bedienelement 10 kann zudem dazu ausgebildet sein, sich gegenüber der Serviceeinheit 4 zu authentifizieren, wobei ein Zugriff auf das Bestandsverzeichnis der Serviceeinheit 4 und/oder die Versorgungsgüter 5 der Serviceeinheit 4 nach erfolgreicher Authentifizierung freigegeben wird. Die Authentifizierung kann beispielsweise über das drahtlose Netzwerk 7 durchgeführt werden, z.B. mittels einer entsprechenden Software-Anwendung, die auf dem ersten Bedienelement 10 gespeichert ist. Prinzipiell kann auf dieser Basis ein Verschlusssystem für die Serviceeinheit 4 umgesetzt werden, mit Hilfe dessen die Serviceeinheit 4 über das erste Bedienelement 10 auf- und absperrbar ist.

Alternativ oder zusätzlich kann die Serviceeinheit 4 ferner einen Datenspeicher 6 umfassen, auf dem unter anderem das Bestandsverzeichnis gespeichert sein kann. Das erste Bedienelement 10 kann nun mit dem Datenspeicher 6 verbunden werden, z.B. kann der Datenspeicher an den RFID-Tag 17 gekoppelt sein und/oder mit dem drahtlosen Netzwerk 7 verbunden sein. Derart kann das Bestandsverzeichnis nicht nur lokal auf der Serviceeinheit 4 gespeichert sein (und beispielsweise schon mit der Auslieferung der Serviceeinheit 4 von einem Catering-Dienstleister abgespeichert werden), sondern überdies mittels dem ersten Bedienelement 10 jederzeit aktualisiert werden. Die Serviceeinheit 4 kann ferner beispielsweise eine Serviceeinheit-Anzeige 11 umfassen, auf der Informationen über das Bestandsverzeichnis der Serviceeinheit 4 und/oder über Produkte angezeigt werden können. In diesem Sinne kann die Serviceeinheit-Anzeige 11 gewissermaßen als elektronisches Etikett fungieren.

Grundsätzlich kann das System 1 neben dem ersten Bedienelement 10 weitere Bedienelemente umfassen, die unterschiedlich ausgeführt sein können. Beispielsweise können neben Datenbrillen ebenso Smartphones, Smartwatches, Tablet-Computer und/oder andere tragbare Computer zum Einsatz kommen. In der Ausführungsform in Fig. 1 ist lediglich rein beispielhaft ein zweites Bedienelement 10' vorgesehen, welches nicht am Körper der Flugbegleiter tragbar ist, sondern fest in die Serviceeinheit 4 integriert ist. Die Serviceeinheit-Anzeige 11 der Serviceeinheit 4 dient in diesem Fall als zweites Bedienelement 10' und ist hierzu als Touchscreen ausgebildet, über welchen nicht nur Informationen dargestellt werden können, sondern darüber hinaus ebenfalls Eingaben gemacht werden können. Ebenso wie das erste Bedienelement 10 kann auch das zweite Bedienelement 10' zur Erfassung und Identifizierung der Versorgungsgüter 5 ausgebildet sein. Hierzu kann beispielsweise ein Barcodeauslesegerät mit dem Touchscreen kombiniert werden (nicht dargestellt). Ebenso wie weiter oben für das erste Bedienelement 10 beschrieben wurde, kann der Flugbegleiter die Produktausgabe auch über das zweite Bedienelement 10' durchführen, indem Versorgungsgüter 5 bei der Ausgabe erfasst werden und das Bestandsverzeichnis entsprechend aktualisiert wird. Hierzu kann die Serviceeinheit 4 bzw. das zweite Bedienelement 10' an das drahtlose Netzwerk 7 angebunden sein. Je nach Flugsituation kann es vorteilhaft sein, das erste Bedienelement 10 oder das zweite Bedienelement 10' für die Warenausgabe zu verwenden. Das dargestellte System 1 ist in dieser Ausführungsvariante somit besonders flexibel.

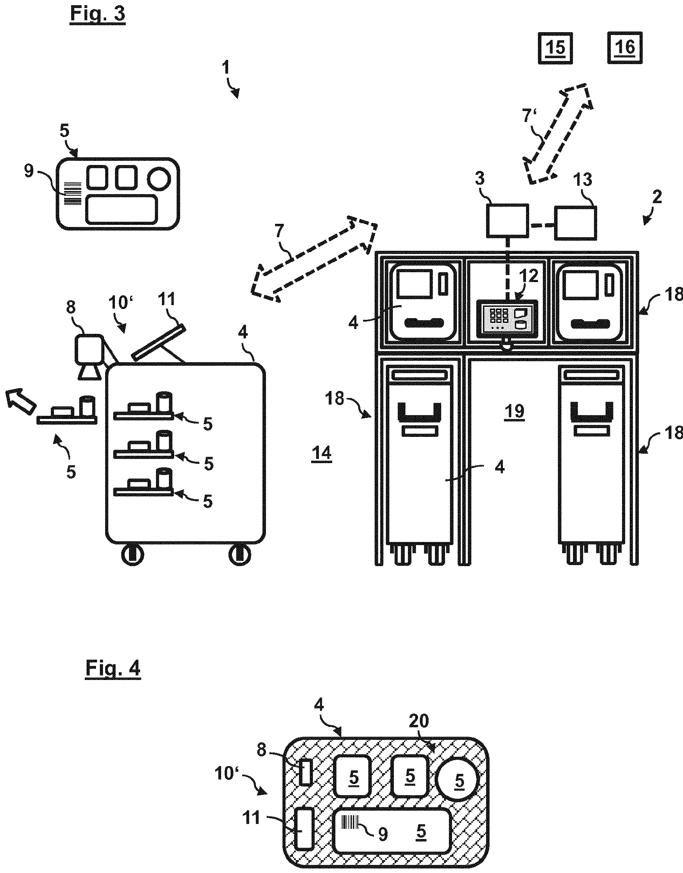

Fig. 3 zeigt eine schematische Ansicht eines Systems 1 zur Bestandsführung einer Bordverpflegung eines Fahrzeugs 100 gemäß einer weiteren Ausführungsform der Erfindung.

Grundsätzlich ähnelt das System 1 in Fig. 3 demjenigen in Fig. 1. Rein beispielhaft ist hier ein Bedienelement 10' dargestellt, welches mit einer als Touchscreen ausgebildeten Serviceeinheit-Anzeige 11 in einer Oberseite der Serviceeinheit 4 integriert ist. Ferner weist das Bedienelement 10' an der Oberseite der Serviceeinheit 4 eine Identifizierungseinheit 8 zur Auslese von auf Versorgungsgütern 5 angebrachten Kennzeichen 9 auf bzw. ist mit dieser kommunikativ verbunden. Die Identifizierungseinheit 8 kann beispielsweise als Barcodelesegerät ausgebildet sein kann, z.B. ein CCD-Scanner oder eine Kamera, die einen Barcode als Kennzeichen 9 auslesen kann.

In diesem konkreten Beispiel trägt die Serviceeinheit 4 eine Vielzahl von Versorgungsgütern 5 in Form von Tabletts, welche jeweils mit mehreren Produkten vorgepackt sind, z.B. Fertiggerichten, Getränken etc. Jedes Tablett 5 ist hierbei mit einem Kennzeichen 9, z.B. einem Strichcode, versehen (vgl. das Tablett 5 oben links in Fig. 3). Das Kennzeichen 9 wird von der Identifizierungseinheit 8 bei der Entnahme eines Tabletts 5 ausgelesen. Anschließend wird das Bestandsverzeichnis der Serviceeinheit 4 aktualisiert. Das System 1 kann hierbei manuell oder automatisch initialisiert werden, beispielsweise durch Öffnen einer Tür der Serviceeinheit 4 und/oder durch Aktivieren einer Software-Anwendung des Bedienelements 10'.

Ebenso kann es vorgesehen sein, dass die auf den Tabletts 5 befindlichen Produkte direkt identifiziert werden, z.B. ebenfalls anhand von Strichcodes oder dergleichen, die auf den Produkten angebracht sind. In alternativen Ausgestaltungen kann die Identifizierungseinheit 8 zudem die äußere Gestalt der Produkte bestimmten und auf dieser Basis die Produkte bzw. die Tabletts 5 identifizieren, z.B. durch optische Erfassung der äußeren Gestalt, beispielsweise auf der Basis von Objekterkennungsalgorithmen, denen Objektmodelle der Produkte zugrunde liegen. Die Identifizierungseinheit 8 kann fest in die Serviceeinheit 4 integriert sein. Alternativ kann die Identifizierungseinheit 8 Bestandteil eines tragbaren Bedienelements sein und/oder an dieses kommunikativ gekoppelt sein.

Fig. 4 zeigt eine schematische Ansicht einer Serviceeinheit 4 für ein System 1 zur Bestandsführung einer Bordverpflegung eines Fahrzeugs 100 gemäß einer weiteren Ausführungsform der Erfindung.

In diesem Fall ist die Serviceeinheit 4 als elektronisches Tablett ausgebildet, welches über ein Bedienelement 10' Versorgungsgüter 5 erfasst, die auf das Tablett gestellt werden und/oder von diesem entnommen werden, und diese über Kennzeichen 9 identifiziert, die an den Versorgungsgütern 5 angebracht sind. Hierzu umfasst das Bedienelement 10' eine Identifizierungseinheit 8, welche beispielsweise als Barcodelesegerät ausgebildet sein kann. Ferner weist das Bedienelement 10' optional eine Serviceeinheit-Anzeige 11 auf, die beispielsweise Informationen über das Bestandsverzeichnis ausgeben kann. Das Tablett ist somit als "Smart Tablet" ausgebildet, wobei das Bestandsverzeichnis automatisch aktualisiert wird.

In der beispielhaften Ausführungsform in Fig. 4 umfasst die Serviceeinheit 4 ferner einen oder mehrere Gewichtsensoren 20. Beispielsweise kann eine Auflagefläche des Tabletts als Wägezelle ausgebildet sein. In einer derartigen Weiterbildung kann der Verbrauch der auf der Serviceeinheit 4 befindlichen Versorgungsgüter 5 überwacht werden. Beispielsweise kann derart automatisch ein Signal an das Bordpersonal generiert werden im Fall, dass ein Getränk nachzufüllen ist. Es versteht sich, dass zu diesem Zweck auch andere Sensortechnologien zum Einsatz kommen können.

Die wesentlichen Vorteile der beschriebenen Bestandsführung für die Bordverpflegung lassen sich wie folgt zusammenfassen:
- Es wird jederzeit sichergestellt, dass die richtige Menge an Produkten vorhanden ist, sodass der Bestand optimal und effizient geführt werden kann.
- Der Umsatz, die Ressourcenausnutzung und die Planung werden verbessert.
- Durch die Verknüpfung unterschiedlicher Informationen und die Sammlung von Daten kann die Bestandsführung und das Catering im Allgemeinen optimal auf Kundenwünsche zugeschnitten werden.
- Die Organisation, die Effizienz und die Übersichtlichkeit der Bordküche werden optimiert.

In der vorangegangenen detaillierten Beschreibung sind verschiedene Merkmale zur Verbesserung der Stringenz der Darstellung in einem oder mehreren Beispielen zusammengefasst worden. Es sollte dabei jedoch klar sein, dass die obige Beschreibung lediglich illustrativer, keinesfalls jedoch beschränkender Natur ist. Sie dient der Abdeckung aller Alternativen und Modifikationen der verschiedenen Merkmale und Ausführungsbeispiele, die unter den Gegenstand der Erfindung fallen, welcher durch die Ansprüche definiert wird. Viele andere Beispiele werden dem Fachmann aufgrund seiner fachlichen Kenntnisse in Anbetracht der obigen Beschreibung sofort und unmittelbar klar sein.

Die Ausführungsbeispiele wurden ausgewählt und beschrieben, um die der Erfindung zugrundeliegenden Prinzipien und ihre Anwendungsmöglichkeiten in der Praxis bestmöglich darstellen zu können. Dadurch können Fachleute die Erfindung und ihre verschiedenen Ausführungsbeispiele in Bezug auf den beabsichtigten Einsatzzweck optimal modifizieren und nutzen. In den Ansprüchen sowie der Beschreibung werden die Begriffe "beinhaltend" und "aufweisend" als neutralsprachliche Begrifflichkeiten für die entsprechenden Begriffe "umfassend" verwendet. Weiterhin soll eine Verwendung der Begriffe "ein", "einer" und "eine" eine Mehrzahl derartig beschriebener Merkmale und Komponenten nicht grundsätzlich ausschließen.

### Bezugszeichenliste

- 1: System
- 2: Bordküche
- 3: Steuereinheit
- 4: Serviceeinheit
- 5: Versorgungsgut
- 6: Datenspeicher
- 7, 7': drahtlose Datenverbindung
- 8: Identifizierungseinheit
- 9: Kennzeichen
- 10: erstes Bedienelement
- 10': zweites Bedienelement
- 11: Serviceeinheit-Anzeige
- 12: Bordküchen-Anzeige
- 13: Kabinenmanagementsystem
- 14: Fahrzeugkabine
- 15: Airline
- 16: Caterer
- 17: RFID-Tag/Transponder
- 18: Bordküchenmonument
- 19: Einschubfach
- 20: Gewichtssensor
- 100: Luftfahrzeug

## Patentansprüche

1. System (1) zur Bestandsführung einer Bordverpflegung eines Fahrzeugs, insbesondere eines Luftfahrzeugs (100), mit:
einer Bordküche (2), welche mit einer Steuereinheit (3) zur Steuerung der Bordküche (2) versehen ist, wobei die Steuereinheit (3) dazu ausgebildet ist, Bestandsführungsdaten der Bordküche (2) bereitzustellen;
einer Serviceeinheit (4) zum Transport von Versorgungsgütern (5) innerhalb des Fahrzeugs, wobei die Bestandsführungsdaten ein Bestandsverzeichnis der mit der Serviceeinheit (4) transportierten Versorgungsgüter (5) umfassen; und
zumindest ein Bedienelement (10, 10'), welches über eine drahtlose Datenverbindung (7) mit der Steuereinheit (3) der Bordküche (2) kommunikativ verbunden und dazu ausgebildet ist, eine Entnahme eines Versorgungsguts (5) von der Serviceeinheit (4) und/oder eine Aufnahme eines Versorgungsguts (5) von der Serviceeinheit (4) zu erfassen und darauf aufbauend eine Aktualisierung des Bestandsverzeichnisses der transportierten Versorgungsgüter (5) zu veranlassen;
wobei das zumindest eine Bedienelement (10, 10') ein erstes Bedienelement (10) umfasst, welches als tragbarer Computer ausgebildet ist.

2. System (1) nach Anspruch 1, wobei das zumindest eine Bedienelement (10, 10') eine Identifizierungseinheit (8) aufweist, welche dazu ausgebildet ist, ein Versorgungsgut (5) anhand eines darauf angebrachten Kennzeichens (9) zu identifizieren.

3. System (1) nach Anspruch 2, wobei die Identifizierungseinheit (8) als Barcodelesegerät ausgebildet ist.

4. System (1) nach einem der Ansprüche 1 bis 3, wobei das zumindest eine Bedienelement (10, 10') zur Anzeige der Bestandsführungsdaten ausgebildet ist.

5. System (1) nach einem der Ansprüche 1 bis 4, wobei die Bestandsführungsdaten zumindest eines von Cateringdaten, Passagierdaten und Kabinendaten umfassen.

6. System (1) nach Anspruch 1, wobei das erste Bedienelement (10) ein Tablet-Computer, ein Smartphone, eine Smartwatch oder eine Datenbrille ist.

7. System (1) nach einem der Ansprüche 1 bis 6, wobei das zumindest eine Bedienelement (10, 10') ein zweites Bedienelement (10') umfasst, welches in die Serviceeinheit (4) integriert ist.

8. System (1) nach Anspruch 7, wobei das zweite Bedienelement (10') ein Touchscreen ist.

9. System (1) nach einem der Ansprüche 1 bis 8, wobei das zumindest eine Bedienelement (10, 10') dazu ausgebildet ist, die Serviceeinheit (4) zu identifizieren und darauf aufbauend der Serviceeinheit (4) das Bestandsverzeichnis zuzuordnen.

10. System (1) nach Anspruch 9, wobei das zumindest eine Bedienelement (10, 10') dazu ausgebildet ist, sich gegenüber der Serviceeinheit (4) zu authentifizieren, wobei ein Zugriff auf das Bestandsverzeichnis der Serviceeinheit (4) und/oder die Versorgungsgüter (5) der Serviceeinheit (4) nach erfolgreicher Authentifizierung freigegeben wird.

11. System (1) nach einem der Ansprüche 1 bis 10, wobei die Serviceeinheit (4) einen Datenspeicher (6) umfasst, welcher zur Speicherung des Bestandsverzeichnisses ausgebildet ist.

12. System (1) nach Anspruch 11, wobei das zumindest eine Bedienelement (10, 10') kommunikativ mit dem Datenspeicher (6) der Serviceeinheit (4) verbunden und dazu ausgebildet ist, das Bestandsverzeichnis aus dem Datenspeicher (6) auszulesen.

13. System (1) nach Anspruch 11 oder 12, wobei das zumindest eine Bedienelement (10, 10') kommunikativ mit dem Datenspeicher (6) der Serviceeinheit (4) verbunden und dazu ausgebildet ist, bei Entnahme eines Versorgungsguts (5) von der Serviceeinheit (4) und/oder Aufnahme eines Versorgungsguts (5) von der Serviceeinheit (4) eine Aktualisierung des Bestandsverzeichnisses auf dem Datenspeicher (6) zu veranlassen.

14. System (1) nach einem der Ansprüche 1 bis 13, wobei die Serviceeinheit (4) eine Serviceeinheit-Anzeige (11) umfasst, welche zur Anzeige des Bestandsverzeichnisses ausgebildet ist.

15. System (1) nach einem der Ansprüche 1 bis 14, wobei die Bordküche (2) eine Bordküchen-Anzeige (12) aufweist, welche zur Anzeige der Bestandsführungsdaten ausgebildet ist.

16. System (1) nach einem der Ansprüche 1 bis 15, wobei die Steuervorrichtung (3) der Bordküche (2) kommunikativ mit einem Kabinenmanagementsystem (14) des Fahrzeugs verbunden ist.

17. System (1) nach einem der Ansprüche 1 bis 16, wobei die Serviceeinheit (4) ein Servicewagen, ein Container oder ein Tablett ist.

18. Luftfahrzeug (100) mit einem System (1) nach einem der Ansprüche 1 bis 17.

## Claims

1. System (1) for stock management for on-board catering in a vehicle, in particular an aircraft (100), having:
a galley (2) which is provided with a control unit (3) for controlling the galley (2), wherein the control unit (3) is designed to supply stock management data to the galley (2);
a service unit (4) for transporting supply items (5) within the vehicle, wherein the stock management data include an inventory of the supply items (5) transported using the service unit (4); and
at least one operator control element (10, 10') which is connected in terms of communication to the control unit (3) of the galley (2) via a wireless data connection (7) and is designed to record removal of a supply item (5) from the service unit (4) and/or receiving of a supply item (5) by the service unit (4) and, on the basis of this, to initiate updating of the inventory for the transported supply items (5),
wherein the at least one operator control element (10, 10') comprises a first operator control element (10) which is in the form of a portable computer.

2. System (1) according to Claim 1, wherein the at least one operator control element (10, 10') has an identification unit (8) which is designed to identify a supply item (5) on the basis of an identifier (9) attached to it.

3. System (1) according to Claim 2, wherein the identification unit (8) is in the form of a barcode reader.

4. System (1) according to one of Claims 1 to 3, wherein the at least one operator control element (10, 10') is designed for displaying the stock management data.

5. System (1) according to one of Claims 1 to 4, wherein the stock management data include at least one from amongst catering data, passenger data and cabin data.

6. System (1) according to Claim 1, wherein the first operator control element (10) is a tablet computer, a smartphone, a smartwatch or a pair of data glasses.

7. System (1) according to one of Claims 1 to 6, wherein the at least one operator control element (10, 10') comprises a second operator control element (10') which is integrated into the service unit (4).

8. System (1) according to Claim 7, wherein the second operator control element (10') is a touchscreen.

9. System (1) according to one of Claims 1 to 8, wherein the at least one operator control element (10, 10') is designed to identify the service unit (4) and to assign the inventory to the service unit (4) on the basis of this.

10. System (1) according to Claim 9, wherein the at least one operator control element (10, 10') is designed to authenticate itself with respect to the service unit (4), wherein access to the inventory of the service unit (4) and/or the supply items (5) of the service unit (4) is enabled after successful authentication.

11. System (1) according to one of Claims 1 to 10, wherein the service unit (4) comprises a data memory (6) which is designed for storing the inventory.

12. System (1) according to Claim 11, wherein the at least one operator control element (10, 10') is connected in terms of communication to the data memory (6) of the service unit (4) and is designed to read out the inventory from the data memory (6).

13. System (1) according to Claim 11 or 12, wherein the at least one operator control element (10, 10') is connected in terms of communication to the data memory (6) of the service unit (4) and is designed to initiate updating of the inventory in the data memory (6) when a supply item (5) is removed from the service unit (4) and/or when a supply item (5) is received by the service unit (4).

14. System (1) according to one of Claims 1 to 13, wherein the service unit (4) comprises a service unit display (11) which is designed for displaying the inventory.

15. System (1) according to one of Claims 1 to 14, wherein the galley (2) has a galley display (12) which is designed for displaying the stock management data.

16. System (1) according to one of Claims 1 to 15, wherein the control apparatus (3) of the galley (2) is connected in terms of communication to a cable management system (14) of the vehicle.

17. System (1) according to one of Claims 1 to 16, wherein the service unit (4) is a service trolley, a container or a tray.

18. Aircraft (100) having a system (1) according to one of Claims 1 to 17.

## Revendications

1. Système (1) de gestion du ravitaillement d'un véhicule, notamment d'un avion (100), ledit système comprenant :
une cuisine de bord (2) qui est pourvue d'une unité de commande (3) destinée à commander la cuisine de bord (2), l'unité de commande (3) étant conçue pour fournir des données de gestion de la cuisine de bord (2) ;
une unité de service (4) destinée à transporter des articles d'approvisionnement (5) à l'intérieur du véhicule, les données de gestion comprenant un registre d'inventaire des articles d'approvisionnement (5) transportés avec l'unité de service (4) ; et
au moins un élément d'actionnement (10, 10') qui communique avec l'unité de commande (3) de la cuisine de bord (2) par une liaison de données sans fil (7) et qui est conçu pour détecter le retrait d'un article d'approvisionnement (5) de l'unité de service (4) et/ou la réception d'un article d'approvisionnement (5) par l'unité de service (4) et pour ordonner, sur cette base, la mise à jour du registre d'inventaire des articles d'approvisionnement transportés (5) ;
l'au moins un élément d'actionnement (10, 10') comprenant un premier élément d'actionnement (10) qui est conçu comme un ordinateur portable.

2. Système (1) selon la revendication 1, l'au moins un élément d'actionnement (10, 10') comportant une unité d'identification (8) qui est conçue pour identifier un article d'approvisionnement (5) à l'aide d'un identifiant (9) attaché à celui-ci.

3. Système (1) selon la revendication 2, l'unité d'identification (8) étant conçue comme un lecteur de code-barres.

4. Système (1) selon l'une des revendications 1 à 3, l'au moins un élément d'actionnement (10, 10') étant conçu pour afficher les données de gestion.

5. Système (1) selon l'une des revendications 1 à 4, les données de gestion comprenant l'un au moins parmi des données de restauration, des données passagers et des données de cabine.

6. Système (1) selon la revendication 1, le premier élément d'actionnement (10) étant une tablette informatique, un smartphone, une montre intelligente ou des lunettes de données.

7. Système (1) selon l'une des revendications 1 à 6, l'au moins un élément d'actionnement (10, 10') comprenant un deuxième élément d'actionnement (10'), qui est intégré à l'unité de service (4).

8. Système (1) selon la revendication 7, le deuxième élément d'actionnement (10') étant un écran tactile.

9. Système (1) selon l'une des revendications 1 à 8, l'au moins un élément d'actionnement (10, 10') étant conçu pour identifier l'unité de service (4) et pour associer le registre d'inventaire à l'unité de service (4) .

10. Système (1) selon la revendication 9, l'au moins un élément d'actionnement (10, 10') étant conçu pour s'authentifier auprès de l'unité de service (4), l'accès au registre d'inventaire de l'unité de service (4) et/ou aux articles d'approvisionnement (5) de l'unité de service (4) étant libéré après authentification réussie.

11. Système (1) selon l'une des revendications 1 à 10, l'unité de service (4) comprenant une mémoire de données (6) qui est conçue pour mémoriser le registre d'inventaire.

12. Système (1) selon la revendication 11, l'au moins un élément d'actionnement (10, 10') étant en communication avec la mémoire de données (6) de l'unité de service (4) et étant conçu pour lire le registre d'inventaire dans la mémoire de données (6).

13. Système (1) selon la revendication 11 ou 12, l'au moins un élément d'actionnement (10, 10') étant en communication avec la mémoire de données (6) de l'unité de service (4) et étant conçu pour ordonner une mise à jour du registre d'inventaire dans la mémoire de données (6) lorsqu'un article d'approvisionnement (5) est retiré de l'unité de service (4) et/ou qu'un article d'approvisionnement (5) est reçu par l'unité de service (4) .

14. Système (1) selon l'une des revendications 1 à 13, l'unité de service (4) comprenant un affichage d'unité de service (11) qui est conçu pour afficher le registre d'inventaire.

15. Système (1) selon l'une des revendications 1 à 14, la cuisine de bord (2) comportant un affichage de cuisine de bord (12) qui est conçu pour afficher les données de gestion.

16. Système (1) selon l'une des revendications 1 à 15, le dispositif de commande (3) de la cuisine de bord (2) est en communication avec un système de gestion de cabine (14) du véhicule.

17. Système (1) selon l'une des revendications 1 à 16, l'unité de service (4) étant un chariot de service, un conteneur ou un plateau.

18. Avion (100) comprenant un système (1) selon l'une des revendications 1 à 17.
